# EUROPEAN PATENT SPECIFICATION

(11) **EP 3 425 553 B1**
(45) Date of publication and mention of the grant of the patent: **31.05.2023**
(21) Application number: 16892467.8
(22) Date of filing: 29.02.2016
(51) Int. Cl.: G06K 7/10, E05B 41/00, F16K 35/06, F16K 37/00, G01V 3/00, G01V 15/00, E05B 19/22, E05B 47/00

(54) **DETECTION DEVICE, DETECTION SYSTEM, DETECTION SYSTEM OPERATION TOOL, AND DETECTION SYSTEM MECHANISM**
DETEKTOR, DETEKTIONSSYSTEM, BEDIENUNGSWERKZEUG FÜR DETEKTIONSSYSTEM UND DETEKTIONSSYSTEMMECHANISMUS
DISPOSITIF DE DÉTECTION, SYSTÈME DE DÉTECTION, OUTIL D'UTILISATION DE SYSTÈME DE DÉTECTION ET MÉCANISME DE SYSTÈME DE DÉTECTION

(43) Date of publication of application: 09.01.2019
(73) Proprietor: Hitachi Systems, Ltd., Tokyo 141-8672 (JP); Kyoto Tool Co., Ltd., Kyoto-shi Kyoto 612-8393 (JP); Hitachi, Ltd., Tokyo 100-8280 (JP)
(72) Inventor: INOUE, Kunihiro, Matsudo-shi, Chiba 271-0092 (JP); YAMAUCHI, Shigeru, Tokyo 141-8672 (JP); KAWAZOE, Toru, Tokyo 141-8672 (JP); SARUYAMA, Masaaki, Tokyo 141-8672 (JP); NISHIOKA, Masaaki, Kyoto 613-0034 (JP); NAKATA, Shogo, Kyoto 613-0034 (JP); OKADA, Norihisa, Tokyo 100-8280 (JP)
(74) Representative: Zimmermann, Tankred Klaus
(86) International application number: PCT/JP2016/056129
(87) International publication number: WO 2017/149622

(56) References cited:
- WO-A1-2011/057434
- DE-A1- 19 654 443
- JP-A- 2002 333 079
- JP-A- 2003 185 056
- JP-A- 2006 073 394
- JP-A- 2007 142 687

## Description

### {Technical Field}

The present invention relates to a detection device, a detection system, a detection system operation tool, and a detection system mechanism.

### {Background Art}

Among various infrastructures and so on, there exists one with an IC tag attached thereto as described in PTL 1, for example. In PTL 1, a valve 2 is attached to a pipe disposed under the ground, and a socket fitting part 1 is provided on the valve 2. An IC tag 7 is attached to the socket fitting part 1. Further, on a valve switch 3, a lock mechanism 5 having a loop antenna 8 is provided, and the valve switch 3 is inserted from the ground, thereby making it possible to acquire information of the IC tag 7 and perform a switching operation of the valve 2.

JP 2002-3333079 A discloses a valve opening detecting device. JP 2002-3333079 A has a RFID accommodating board on which RFID tags are arranged, and the RFID accommodating board is rotated with the rotation of valve shaft and rotating shaft. Further, JP 2002-3333079 A has a long operating rod handle and antenna attached to the distal end portion of the operating rod handle. JP 2002-3333079 A has a configuration in which the valve body is opened and closed by rotating a long operating rod handle (operation portion) provided coaxially with the rotation axis.

JP 2003-185056 A discloses a valve provided with electronic rating plate.

WO 2011/057434 A1 discloses an intelligent locking system including a lock, an unlock device, and a lock generation device. WO 2011/057434 A1 discloses a device for unlocking a lock. A sensor (paragraph [0023]) may be used for determining the status of the lock. An identity status conversion module includes RFID identity checks (paragraph [0023]). The mechanism is actuated by a solenoid. However, WO 2011/057434 A1 fails to disclose at least the combination of operation tool, mechanism, deportation or engaging portion and operation portion with the structural and functional features defined by claim 1. Accordingly, WO 2011/057434 A1 is also completely irrelevant to the invention as currently defined.

DE 19654443 A1 discloses a method and a device for controlling the fastening of a lock.

### {Citation List}

### {Patent Literature}

{PTL 1} JP 2015-109507

### {Summary of Invention}

### {Technical Problem}

By the way, in the constitution disclosed in PTL 1, it is possible to read information (an individual identification number, a closing direction, an installation place, an installation year, and so on) of the valve 2 from the IC tag 7. However, it is impossible to judge to which of the open position or the close position the valve 2 has been rotated actually.

There exists the similar problem other than the valve. That is, under the present circumstances, in a mechanical device capable of switching between an open position and a close position by a rotation operation of a rotation part, there hardly exists a method of judging to either position the rotation part has been rotated other than the visual judging method actually. Concretely, to confirm the open position or the close position is often performed by visually confirming an index such as a character indicating "open" or "close" existing near the rotation part.

However, in the case where the confirmation of the open position or the close position is performed by visual observation, the visual observation is difficult to be performed when, for example, the vicinity of the rotation part is dirty (due to, for example, grease, rust occurrence, dirt attachment, or the like), it is coated newly, or the like. In these cases, it sometimes takes time to remove the dirt, peel the coating, or the like, additionally. Further, in the case where the above-described dirt or recoating is not removed, with difficulty in recognizing the index, there is caused such a problem as occurrence of a switching miss between the open position and the close position. Further, in plant sites, shipping, trains, aircraft, or the like, there are a considerable number of places to confirm open and close positions of storage and protective covers of important devices, and in a simple work such as a visual inspection of an open/close state, mistakes such as miss viewing and visual oversight are also concerned.

Further, even in the case where the dirt or recoating does not exist near the rotation part, a worker sometimes falsely recognizes the open position and the close position due to his/her human error. In the case where multiple checks are performed by a plurality of people in order to prevent such false recognition, there is also a problem that an increase in cost is caused accordingly. Further, when it is not clear where the rotation part is, in the case where an operation tool is actually used to operate the rotation part, there are also problems that a state of the operation and an acting state of an acting mechanism including the rotation part are not clear.

The present invention has been made in consideration of the above-described circumstances, and an object thereof is to provide a detection device, a detection system, an operation tool, and a detection system mechanism that are capable of simultaneously detecting an operation state of the operation tool and an acting state of the mechanism actuated by operation of the operation tool as well as detecting whether a rotation part is at an open position or at a close position.

### {Solution to Problem}

In order to solve the above-described problems, a detection device according to claim 1 is provided. Preferred embodiments are disclosed in the depending claims.

### {Advantageous Effects of Invention}

According to the present invention, it becomes possible to securely judge whether a rotation part is at an open position or at a close position.

### {Brief Description of Drawings}

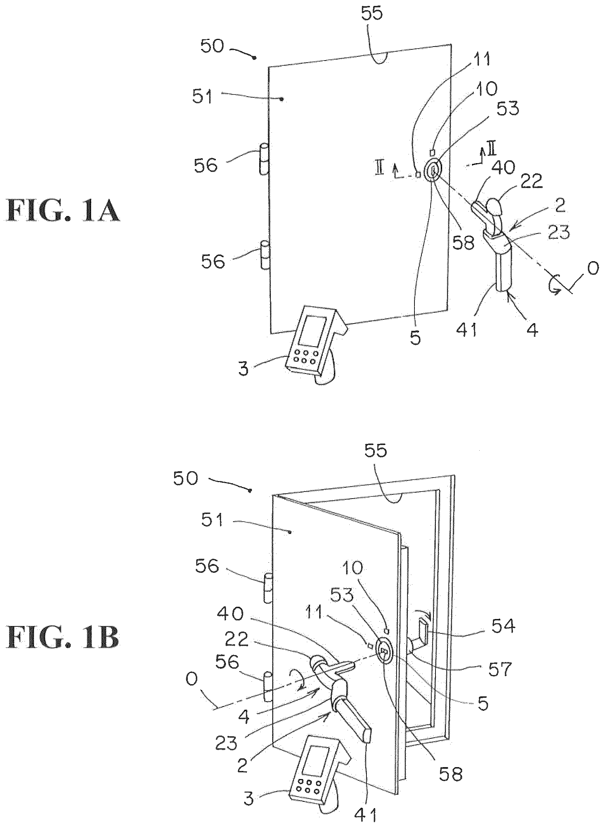

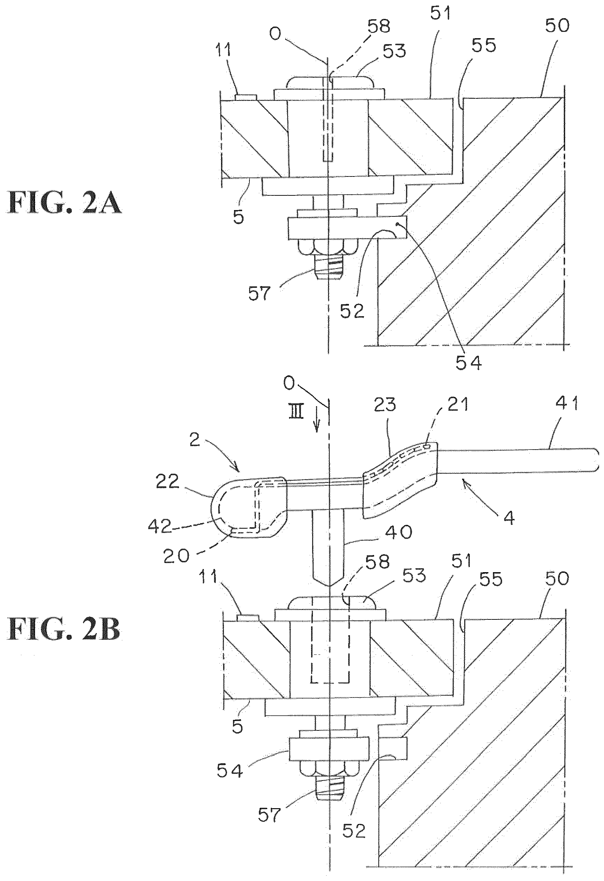

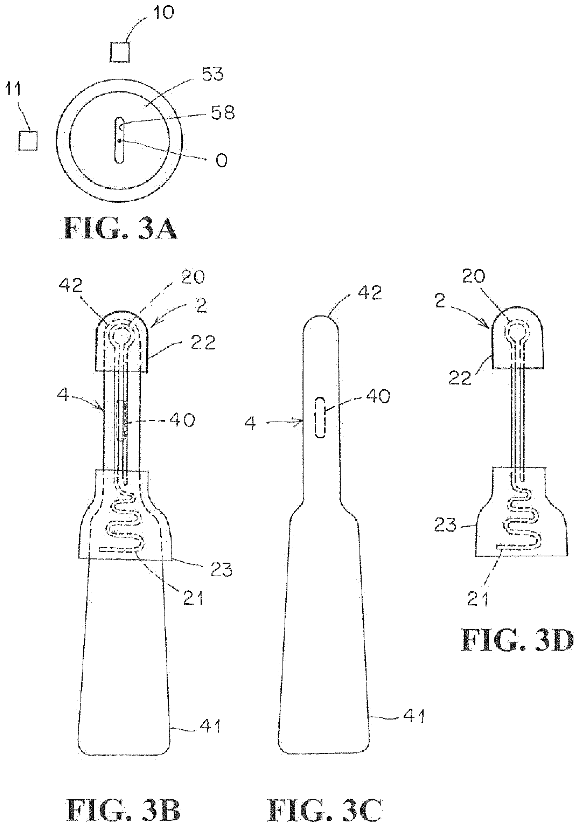

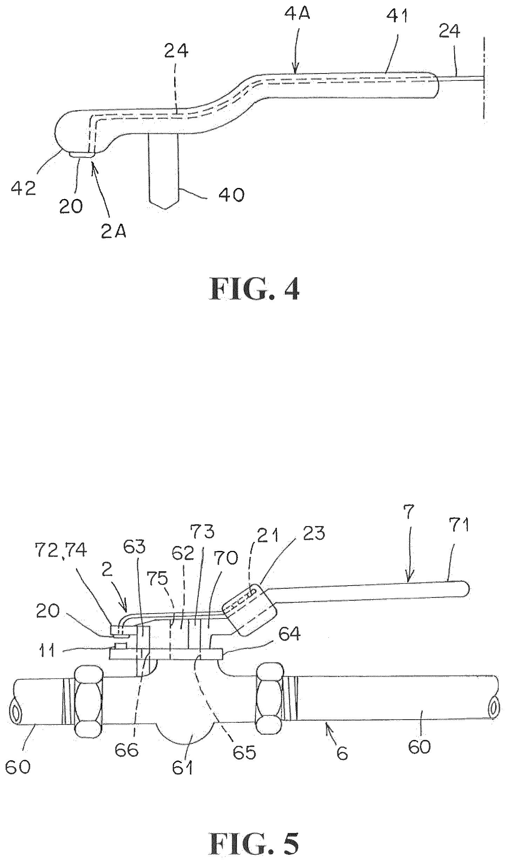

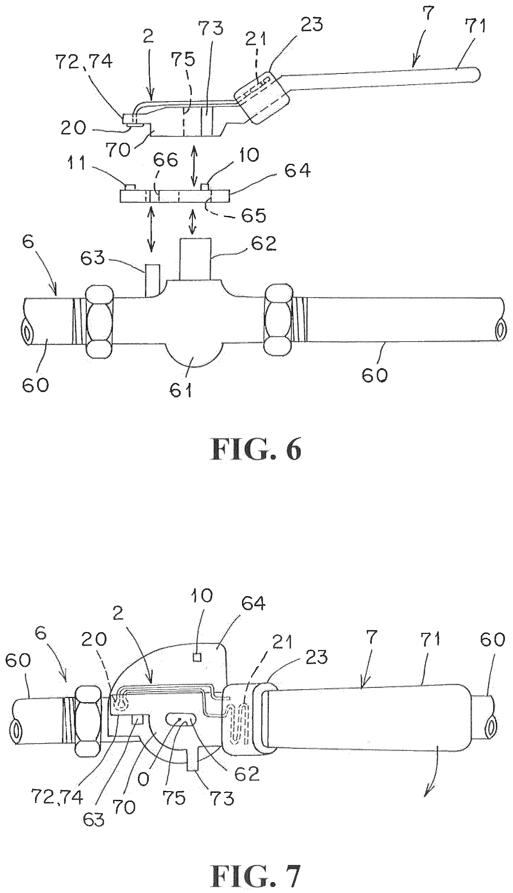

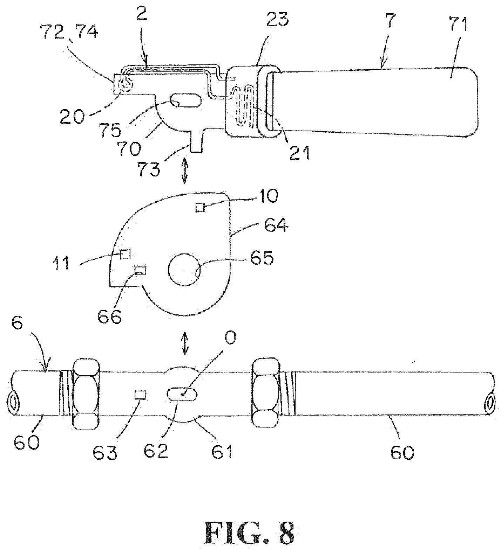

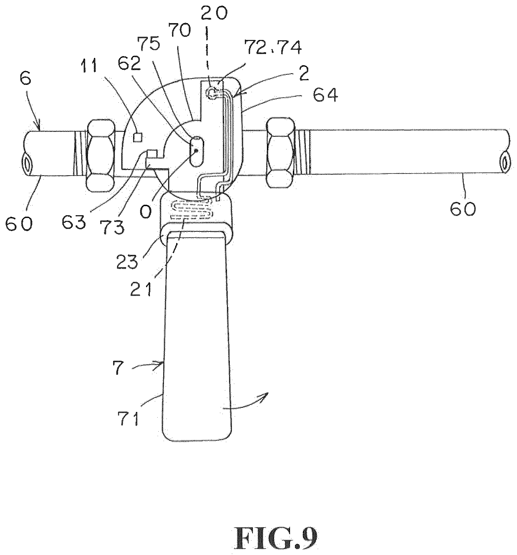

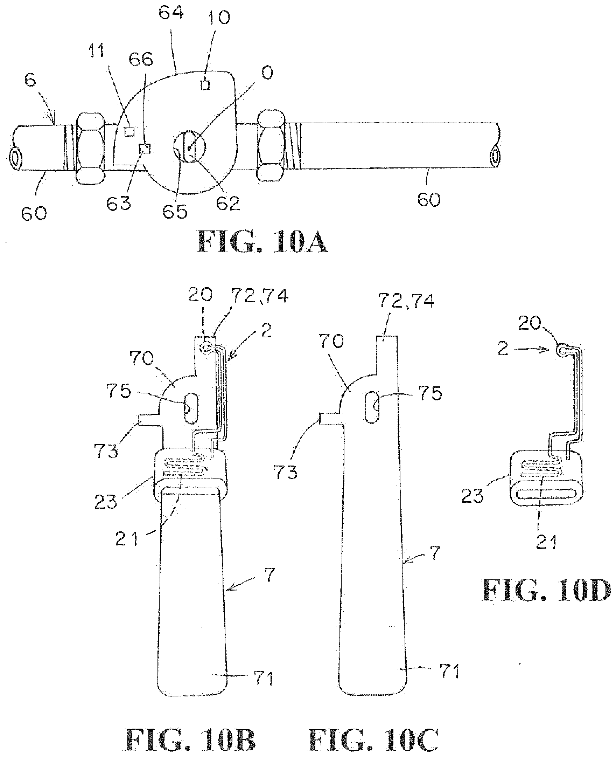

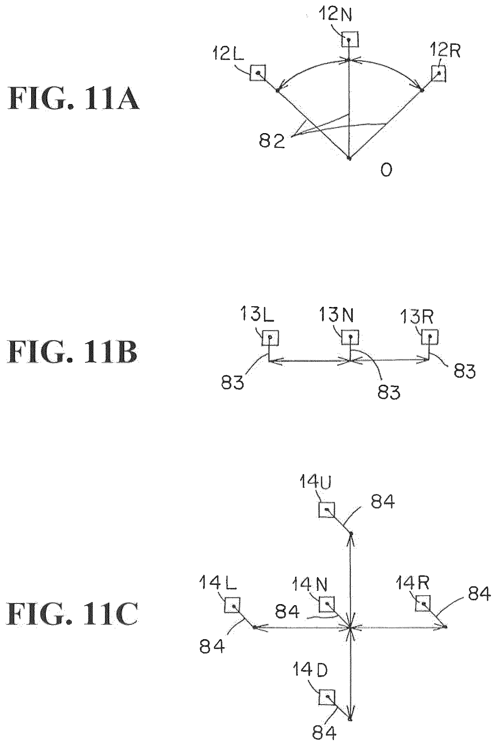

{Fig. 1A and Fig. 1B} are views illustrating a detection device, a detection system, an operation tool, and a mechanism according to a first embodiment of the present invention, Fig. 1A is an explanatory view illustrating a use state (closed state of a door), and Fig. 1B is an explanatory view illustrating a use state (open state of the door).
{Fig. 2A and Fig. 2B} are cross-sectional views illustrating use states of the detection device, the detection system, the operation tool, and the mechanism in Fig. 1A and Fig. 1B, Fig. 2A illustrates the use state (closed state of the door), and Fig. 2B illustrates the use state (open state of the door).
{Fig. 3A to Fig. 3D} are explanatory views illustrating IC tags, a detector, a lock operation tool, and a lock mechanism, Fig. 3A is the explanatory view illustrating the IC tags and the lock mechanism, Fig. 3B is the explanatory view illustrating the detector and the lock operation tool, Fig. 3C is the explanatory view illustrating the lock operation tool, and Fig. 3D is the explanatory view illustrating the detector.
{Fig. 41 is an explanatory view of a detector and a lock operation tool that illustrates a detection device, a detection system, an operation tool, and a mechanism according to a second embodiment of the present invention.
{Fig. 5} is an explanatory side view of a use state that illustrates a detection device, a detection system, an operation tool, and a mechanism according to a third embodiment of the present invention.
{Fig. 6} is an explanatory exploded side view of IC tags, a detector, a valve operation tool, and a pipe valve mechanism illustrated in Fig. 5.
{Fig. 7} is an explanatory plane view illustrating a use state of the detection device, the detection system, the operation tool, and the mechanism illustrated in Fig. 5 (an open state of a valve).
{Fig. 8} is an exploded explanatory plane view illustrating the IC tags, the detector, the valve operation tool, and the pipe valve mechanism illustrated in Fig. 5.
{Fig. 9} is an explanatory plane view illustrating a use state of the detection device, the detection system, the operation tool, and the mechanism illustrated in Fig. 5 (a closed state of the valve).
{Fig. 10A to Fig. 10D} are views according to the third embodiment, Fig. 10A is an explanatory view illustrating the IC tags, the pipe valve mechanism, and a display plate, Fig. 10B is an explanatory view illustrating the detector and the valve operation tool, Fig. 10C is an explanatory view illustrating the valve operation tool, and Fig. 10D is an explanatory view illustrating the detector.
{Fig. 11A to Fig. 11C} are explanatory views illustrating detection devices, detection systems, operation tools, and mechanisms according to modified examples of the present invention.

### {Description of Embodiments}

Hereinafter, there will be explained three embodiments (first to third embodiments) and modified examples of the detection device, the detection system, the operation tool, and the mechanism according to this invention in detail based on the drawings.

### (Explanation of a constitution of Embodiment 1)

Fig. 1A and Fig. 1B to Fig. 3A to Fig. 3D are views illustrating the detection device, the detection system, the operation tool, and the mechanism according to the first embodiment of the present invention. Hereinafter, there will be explained constitutions of the detection device, the detection system, the operation tool, and the mechanism according to this embodiment 1. Fig. 1A is an explanatory view illustrating a use state (closed state of a door 51). Fig. 1B is an explanatory view illustrating a use state (open state of the door 51). Fig. 2A is a cross-sectional view illustrating the use state (closed state of the door 51). Fig. 2B is a cross-sectional view illustrating the use state (open state of the door 51). Fig. 3A is an explanatory view illustrating IC tags and a lock mechanism. Fig. 3B is an explanatory view illustrating a detector and a lock operation tool. Fig. 3C is an explanatory view illustrating the lock operation tool. Fig. 3D is an explanatory view illustrating the detector.

### (Explanation of the detection device and the detection system)

The detection device according to this embodiment includes a plurality of pieces (as one example, two pieces) of IC tags 10, 11, a detector 2, and a reading device 3. The detection system according to this embodiment includes, as the operation tool, a lock operation tool for door (to be simply referred to as a "lock operation tool" hereinafter) 4, as the mechanism, a lock mechanism for door (to be simply referred to as a "lock mechanism" hereinafter) 5, and detection devices 10, 11, 2, and 3.

### (Explanation of the lock mechanism 5)

The aforementioned lock mechanism 5 is a lock mechanism to lock or unlock the door 51 as a second object to or from a wall 50 as a first object. The aforementioned lock mechanism 5 includes a lock receiving portion 52, a cylinder 53, and a lock body 54. The inner side of the door 51 is attached to the inner side of an opening portion 55 of the wall 50 via hinges 56 so as to be openable and closable. Incidentally, inside the aforementioned opening portion 55, important apparatuses that should be protected safely, maintenance tools, a control device of a motive power mechanism, construction tools, or the like are stored, but other apparatuses, members, or the like may be stored.

The lock receiving portion 52 is a hole (rim lock) portion provided in a substantially intermediate portion of a side edge, in a width direction, of the wall 50 forming the opening portion 55. Further, the cylinder 53 is provided in a portion that exists in a middle portion in a height direction and corresponds to the lock receiving portion 52, which is a portion, in the door 51, close to the side edge on the side opposite to the hinges 56. The cylinder 53 includes a shaft member 57 rotatable about a rotation axis O with respect to the door 51. The lock body 54 is attached on the shaft member 57.

Further, by operating the lock operation tool 4 to rotate the shaft member 57 of the cylinder 53 around the rotation axis O, the lock body 54 rotates around the rotation axis O and fits into the lock receiving portion 52 or comes off from the lock receiving portion 52. That is, by a locking operation of the lock operation tool 4, the lock mechanism 5 acts to be locked (see Fig. 1A and Fig. 2A), and by an unlocking operation of the lock operation tool 4, the lock mechanism 5 acts to be unlocked (see Fig. 1B and Fig. 2B).

### (Explanation of the lock operation tool 4)

The lock operation tool 4 includes, as illustrated in Fig. 3C, a key portion 40 being a substantially intermediate portion, an operation portion 41 being one end portion, and a detection portion 42 being the other end portion.

Among them, the key portion 40 is a portion to be inserted into a keyhole 58 of the cylinder 53. Further, the operation portion 41 is a portion to rotate the key portion 40. Further, in the detection portion 42, the detector 2 is disposed. The longitudinal direction of the above-described operation portion 41 and the longitudinal direction of the key portion 4 are substantially perpendicular each other. That is, the operation portion 41 is bent substantially perpendicularly to the key portion 40 so as to extend to the side opposite to the detection portion 42.

Further, the lock operation tool 4 is to make the lock mechanism 5 act to be locked by performing the locking operation (see Fig. 1A and Fig. 2A), and is to make the lock mechanism 5 act to be unlocked by performing the unlocking operation (see Fig. 1B and Fig. 2B).

### (Explanation of the IC tags 10, 11)

As illustrated in Fig. 3A, the two IC tags 10, 11 are each attached to an outer periphery side of the cylinder 53 of the lock mechanism 5 on the door 51, where the two IC tags 10, 11 are fitted in holes for fitting or bonded by an adhesive or the like (not illustrated) as an attachment part. In the two IC tags 10, 11, information on an operation state of the lock operation tool 4 and information on an acting state of the lock mechanism 5 are each stored. That is, in the IC tag 10 on one side, the information corresponding to locking of the lock operation tool 4 (to be simply referred to as "lock information" hereinafter) is stored. Further, in the aforementioned IC tag 11 on the other side, the information corresponding to unlocking of the lock operation tool 4 (to be simply referred to as "unlocking information" hereinafter) is stored.

These two IC tags 10, 11 are each composed of an antenna portion (not illustrated), an IC chip portion (not illustrated), and a cover portion (not illustrated). Among them, in the IC chip portion, information other than the lock information and the unlocking information, for example, individual information of the lock mechanism 5, and so on are stored.

### (Explanation of the detector 2)

Further, as illustrated in Fig. 3D, the detector 2 includes a detection part 20 and an antenna part 21. As illustrated in Fig. 3B, the detector 2 is attached to the lock operation tool 4 via a first attachment part 22 and a second attachment part 23 as attachment parts. Further, the detector 2 is a part to detect each of the lock information and the unlocking information in the two IC tags 10, 11.

The detection part 20 of the detector 2 is composed of a one-time or plural-times wound coil. The detection part 20 is a part to enable electromagnetic induction communication with each antenna portion of the IC tags 10, 11 by being brought close to each antenna portion of the IC tags 10, 11. The detection part 20 is attached to the detection portion 42 of the lock operation tool 4 via the first attachment part 22. Further, the detection part 20 is protected by being covered with the first attachment part 22.

Further, the antenna part 21 is provided to extend from one end of the coil-shaped detection part 20. In the case where the wavelength of electromagnetic waves used for the communication with the reading device 3 is set to λ, a wire length of the antenna part 21 is set to, for example, λ/4 as one example. Further, the antenna part 21 is formed by being bent back a plurality of times. However, when the wire length of the antenna part 21 is not a problem, the antenna part 21 may have a straight shape. Further, the antenna part 21 may be provided on the lock operation tool 4 so as to wind therearound without being bent back. Further, the wire length of the antenna part 21 may be set to an integral multiple larger than 1 of λ/4 (the same is true of the other embodiments).

The antenna part 21 communicates with the reading device 3 by radio with induced electromagnetic waves, radiated radio waves, or the like. Further, the antenna part 21 is attached to a portion between the key portion 40 and the operation portion 41 of the lock operation tool 4 via the second attachment part 23. The antenna part 21 is protected by being covered with the second attachment part 23.

Here, in the case where the detector 2 communicates with the reading device 3 by radio with the radiated radio waves, the lock operation tool 4 is preferably made of metal. That is, this is to make the radiated radio waves radiate to the free space while the radiated radio waves propagating on the surface (metal surface) of the metal lock operation tool 4 as a surface wave. However, the lock operation tool 4 is not limited to the one made of metal, and may be formed of another material.

Incidentally, a wire may be extended straight from the other end of the coil of the coil-shaped detection part 20 to have a wire length of λ/4. In this case, the wire and the antenna part 21 are preferably formed of an insulation-coated wire.

### (Explanation of disposition of the two IC tags 10, 11 and the detector 2)

The two aforementioned IC tags 10, 11 and the detector 2 are disposed at positions where the operation state of the lock operation tool 4 and the acting state of the lock mechanism 5 correspond each other.

That is, the IC tag 10 on one side is attached to a portion to which the detection part 20 (to be described later) of the detection portion 42 approaches and faces to the IC tag 10 when the lock mechanism 5 is brought into a locked state in a state of the key portion 40 being inserted in the keyhole 58. Further, the IC tag 11 on the other side is attached to a portion to which the detection part 20 of the detection portion 42 approaches and faces to the IC tag 11 when the lock mechanism 5 is brought into an unlocked state in a state of the key portion 40 being inserted in the keyhole 58. Incidentally, on the door 51, in the vicinity of the IC tag 10 on one side, a word such as "close" is sometime added, and in the vicinity of the aforementioned IC tag 11 on the other side, an index such as a character of "open" or the like is sometimes added. Incidentally, one example of the distance where the IC tag and the detection part 20 are approached and faced is preferably set to about 5 mm or less because it enables more secure discrimination. However, the distance is not limited to about 5 mm or less. That is, the distance may be farther than 5 mm, which is, for example, 30 mm or less, 25 mm or less, 20 mm or less, 15 mm or less, or the like, as long as secure discrimination is enabled between the IC tag 10 on one side and the IC tag 11 on the other side.

### (Explanation of the reading device 3)

As illustrated in Fig. 1A and Fig. 1B, the reading device 3 includes an antenna portion (not illustrated), a reader IC portion (not illustrated), a microcomputer portion (not illustrated), an operation portion, and a display portion. The reading device 3 communicates with the detector 2 by radio by the antenna portion on the reading device 3 side and the antenna part 21 on the detector 2 side. Further, the reading device 3 reads the lock information and the unlocking information detected by the detector 2. Incidentally, the reading device 3 may be provided with a writing function.

The reading device 3 is a portable type (handy type) that a worker (not illustrated) to operate carries in the constitution illustrated in Fig. 1A and Fig. 1B. Incidentally, the reading device 3 may be attached to the operation portion 41 of the lock operation tool 4 attachably and detachably. Further, the reading device 3 can be connected to a computer network such as the Internet, but may be set to one unconnectable to a computer network. Further, the lock information and the unlocking information read by the reading device 3 may be set to be storable in an external database different from the reading device 3.

### (Explanation of functions of the first embodiment)

The detection devices 10, 11, 2, and 3, the lock operation tool 4, and the lock mechanism 5 having such constitutions as above (to be simply referred to as the "detection devices and the like 10, 11, 2, 3, 4, and 5" hereinafter) can create the following functions.

The states illustrated in Fig. 1A and Fig. 2A are that the lock mechanism 5 is in a lock acting state and the door 51 is in a state of being closed to the wall 50. There will be explained operation and action to open the door 51 from the wall 50 in this state.

First, the key portion 40 of the lock operation tool 4 is inserted in the keyhole 58 of the cylinder 53 of the lock mechanism 5 on the door 51 side in a lock acting state illustrated in Fig. 1A and Fig. 2A. At this time, the detection part 20 of the detector 2 disposed on the detection portion 42 of the lock operation tool 4 and the IC tag 10 on one side disposed on the door 51 are approached and faced each other. Then, the lock information stored in the IC tag 10 on one side is detected by the detector 2 and is read by the reading device 3. This makes it possible to securely confirm and manage (recognize and manage) that the lock operation tool 4 is in a lock operation state and the lock mechanism 5 is in a lock acting state.

Next, the operation portion 41 of the lock operation tool 4 is held to rotate counterclockwise the lock operation tool 4 around the rotation axis O in Fig. 1A. Then, the cylinder 53, the shaft member 57, and the lock body 54 of the lock mechanism 5 rotate counterclockwise around the rotation axis O. Thereby, as illustrated in Fig. 1B and Fig. 2B, the lock body 54 is disengaged from the lock receiving portion 52 in the wall 50 side to be unlocked. This makes it possible to open the door 51 from the wall 50.

At this time, the detection part 20 of the detector 2 disposed on the detection portion 42 of the lock operation tool 4 and the IC tag 11 on the other side disposed on the door 51 are approached and faced each other. Then, the unlocking information stored in the IC tag 11 on the other side is detected by the detector 2 and is read by the reading device 3. This makes it possible to securely confirm and manage (recognize and manage) that the lock operation tool 4 is in an unlocking operation state and the lock mechanism 5 is in an unlock acting state.

Furthermore, the operation portion 41 of the lock operation tool in an unlock operation state illustrated in Fig. 1B and Fig. 2B is held to rotate clockwise the lock operation tool 4 around the rotation axis O. Then, the cylinder 53, the shaft member 57, and the lock body 54 of the lock mechanism 5 rotate clockwise around the rotation axis O. Therefore, as illustrated in Fig. 1A and Fig. 2A, the lock body 54 is fitted in the lock receiving portion 52 in the wall 50 side to be locked. This makes it possible to close the door 51 to the wall 50.

At this time, as described previously, the detection part 20 of the detector 2 disposed on the detection portion 42 of the lock operation tool 4 and the IC tag 10 on one side disposed on the door 51 are approached and faced each other. Thereby, the lock information stored in the IC tag 10 on one side is read by the reading device 3 via the detector 2, and then it is possible to securely confirm and manage (recognize and manage) the lock operation state of the lock operation tool 4 and the locked acting state of the lock mechanism 5.

Incidentally, the lock operation tool 4 is normally stored in a place different from the lock mechanism 5, and when the lock mechanism 5 is locked or unlocked, the lock operation tool 4 is taken out to the lock mechanism 5 from the storage place.

### (Explanation of effects of the first embodiment)

As described above, in this embodiment, it is possible to simultaneously detect the operation state such as the rotation of the lock operation tool 4 and the acting state of the lock mechanism 5 to act by operation of the lock operation tool 4 (for example, an open state or a closed state). Therefore, the respective devices 10, 11, 2, 3, 4, and 5 and the like according to this embodiment can securely confirm and manage (recognize and manage) the operation state of the lock operation tool 4 and the acting state of the lock mechanism 5 (for example, the open state, the closed state, or the like) in association with each other relatively. Therefore, the respective devices 10, 11, 2, 3, 4, and 5 and the like according to this embodiment can reduce the increase in cost due to multiple checks performed by a plurality of people because human errors caused by human visual observation are reduced.

In this embodiment in particular, this is significant when it becomes difficult to visually observe the indexes such as characters of "close," "open," and so on added to the door 51 due to getting dirty, recoating being performed thereon, or the like.

Further, in this embodiment, the detector 2 is disposed on the lock operation tool 4 via the first attachment part 22 and the second attachment part 23. Therefore, it is possible to equip the existing lock operation tool 4 with the detector 2, and thus the existing lock operation tool 4 can be used, thereby making it possible to achieve the reduction in cost. Incidentally, the lock operation tool 4 equipped with the detector 2 according to this embodiment may be manufactured newly.

Further, in this embodiment, the IC tags 10, 11 are each attached to the outer periphery side of the cylinder 53 of the lock mechanism 5 on the door 51 by being fitted in the hole for fitting or by being bonded thereto by an adhesive (not illustrated) or the like as an attachment part. Therefore, the door 51 of the existing lock mechanism 5 can be equipped with the IC tags 10, 11, and thus the door 51 of the existing lock mechanism 5 can be used, thereby making it possible to achieve the reduction in cost. Incidentally, the lock mechanism 5 equipped with the IC tags 10, 11 according to this embodiment 1 may be manufactured newly.

Further, in this embodiment, the detector 2 and the reading device 3 communicate with each other by radio. Accordingly, as compared to wire communication, cable wires, or the like do not obstruct in the way and workability is improved.

Further, in this embodiment, the detector 2 includes the antenna part 21 with the wire length of λ/4, which is made by being bent back a plurality of times. By miniaturization by this bending back, the lock operation tool 4 is constituted to include the detection part 20 on one side of the lock operation tool 4 and the antenna part 21 on the other side of the lock operation tool 4 across the key portion 40, resulting in that it is also possible to dispose the antenna part 21 closer to a hand at the operation portion 41 compactly. Accordingly, according to the compact constitution of the antenna part 21 having a portion bent back a plurality of times and the small-sized detector 2, as compared to the case including a large-sized antenna part, it is possible to improve operationality of the detector 2 and improve the workability.

### (Explanation of a constitution, functions, and effects of the second embodiment)

Fig. 4 is a view illustrating the detection device, the detection system, the operation tool, and the mechanism according to the second embodiment of the present invention. Hereinafter, there will be explained constitutions, functions, and effects of the detection device, the detection system, the operation tool, and the mechanism according to the second embodiment. Incidentally, in Fig. 4, the same reference numerals and symbols as those in Fig. 1A and Fig. 1B to Fig. 3A to Fig. 3D denote the same components.

A detector 2A according to this embodiment includes a detection part 20 and a wire portion 24 connecting the detection part 20 and the reading device 3 (see Fig. 1A and Fig. 1B). The wire portion 24 has a role as a cable for performing wire communication between the detection part 20 and the aforementioned reading device.

Further, inside a lock operation tool 4A as the operation tool according to this embodiment, the wire portion 24 is wired. That is, the wire portion 24 is internally wired between one end portion of a detection portion 42 and the other end portion of an operation portion 41. Furthermore, the wire portion 24 is led out to the outside from the other end portion of the operation portion 41, and the wire portion 24 is connected to the reading device 3.

Incidentally, the detection device, the detection system, the operation tool, and the mechanism according to this embodiment each are constituted as above, thus making it possible to achieve the functions and the effects substantially similar to those of the respective devices and the like 10, 11, 2, 3, 4, and 5 according to the first embodiment.

Particularly, the detector 2A according to this embodiment and the reading device 3 (see Fig. 1A and Fig. 1B) communicate with each other by wire, and thus as compared to radio communication, it is possible to securely read information considering that, for example, security is important, or the like with high accuracy, resulting in that high-quality and highly accurate confirmation and management (recognition and management) can be obtained.

### (Explanation of a constitution of the third embodiment)

Fig. 5 to Fig. 10A to Fig. 10D are views illustrating the detection device, the detection system, the operation tool, and the mechanism according to the third embodiment of the present invention. Hereinafter, there will be explained constitutions of the detection device, the detection system, the operation tool, and the mechanism according to the third embodiment. In Fig. 5 to Fig. 10A to Fig. 10D, the same reference numerals and symbols as those in Fig. 1A and Fig. 1B to Fig. 4 denote the same components. Fig. 10A is an explanatory view illustrating IC tags 10, 11, a pipe valve mechanism 6, and a display plate 64. Fig. 10B is an explanatory view illustrating a detector 2 and a valve operation tool 7. Fig. 10C is an explanatory view illustrating the valve operation tool 7. Fig. 10D is an explanatory view illustrating the detector 2.

### (Explanation of the detection device and the detection system)

The detection device according to this embodiment includes a plurality of pieces of the IC tags 10, 11, which are two, for example, the detector 2, and the reading device 3. The detection system according to this embodiment includes the valve operation tool 7 as the operation tool, the pipe valve mechanism 6, as the mechanism, and the detection devices 10, 11, 2, and 3 according to the first embodiment.

### (Explanation of the pipe valve mechanism 6)

The pipe valve mechanism 6 is provided on the way of a pipe 60, and is a mechanism that closes a valve (not illustrated) to stop the flow of fluid such as liquid or gas (not illustrated) in the pipe 60 or opens the valve to let the fluid in the pipe 60 flow. The pipe valve mechanism 6 includes a valve main body 61, the valve, an open/close shaft 62, and a stopper 63.

The valve main body 61 is provided on the way of the pipe 60. Inside the valve main body 61, the not-illustrated valve is accommodated so as to be openable and closable. One end of the open/close shaft 62 is coupled to this valve. The other end portion of the open/close shaft 62 projects to the outside from the valve main body 61. A shape of the other end portion of the open/close shaft 62 in plan view is a shape other than a circular shape, and is an oval shape in this example. The open/close shaft 62 is rotated around the rotation axis O, thereby making it possible to open or close the valve. Further, the stopper 63 has a quadrangular columnar shape, and is provided on the above-described valve main body 61. The open/close shaft 62 and the stopper 63 are parallel or substantially parallel each other.

### (Explanation of the valve operation tool 7)

The valve operation tool 7 is to operate opening and closing actions of the valve of the pipe valve mechanism 6. The valve operation tool 7 includes, as illustrated in Fig. 10C, an engaging portion 70, an operation portion 71 being one end portion, a detection portion 72 being the other end portion, a close stopper 73, and an open stopper 74. Incidentally, the other end portion is used both as the detection portion 72 and the open stopper 74.

The engaging portion 70 has an oval-shaped engaging hole 75. The oval-shaped other end portion of the open/close shaft 62 is fitted in the engaging hole 75. Further, the operation portion 71 is a portion for rotating the engaging portion 70 to open or close the valve of the pipe valve mechanism 6. Between the engaging portion 70 and the operation portion 71, an antenna part 21 connected to the detector 2 is attached via a second attachment part 23 as an attachment part. On the detection portion 72, a detection part 20 of the detector 2 is disposed via an adhesive as an attachment part, another attachment structure, or the like.

The operation portion 71 extends from the engaging portion 70 toward the side opposite to the detection part 20 side. This makes it possible to prevent a hand or the like of an operator from being caught in between the operation portion 71 of the valve operation tool 7 and the pipe 60 of the pipe valve mechanism 6.

The close stopper 73 and the open stopper 74 that are described above are provided integrally in the engaging portion 70. Further, the other end portion is used both as the detection portion 72 and the open stopper 74. Among them, the close stopper 73 abuts on the stopper 63 of the pipe valve mechanism 6 at the time of a close operation of the valve operation tool 7 as illustrated in Fig. 9. Further, the open stopper 74, together with the detection portion 72, abuts on the stopper 63 of the pipe valve mechanism 6 at the time of an open operation of the valve operation tool 7 as illustrated in Fig. 7.

### (Explanation of the IC tags 10, 11)

Further, the two IC tags 10, 11 are each attached to the pipe valve mechanism 6 via the display plate 64 as an attachment part. In the two IC tags 10, 11, information on an operation state of the valve operation tool 7 and information on an acting state of the pipe valve mechanism 6 are each stored. That is, in the IC tag 10 on one side, information on a close operation state of the valve operation tool 7 and information on a closed acting state of the pipe valve mechanism 6 (to be simply referred to as "close information" hereinafter) are stored. In the IC tag 11 on the other side, information on an open operation state of the valve operation tool 7 and information on an opened acting state of the pipe valve mechanism 6 (to be simply referred to as "open information" hereinafter) are stored. Incidentally, in the two IC tags 10, 11, information other than the close information and the open information, for example, individual information of the pipe valve mechanism 6 and so on are stored.

### (Explanation of the detector 2)

The detector 2 includes the detection part 20 and the antenna part 21 as illustrated in Fig. 10D. The detector 2 is attached to the valve operation tool 7 via an adhesive as an attachment part or the second attachment part 23 as illustrated in Fig. 10B. The detector 2 is a part to detect each of the close information and the open information in the two IC tags 10, 11.

### (Explanation of the display plate 64)

The display plate 64 has a plate shape that substantially covers the valve main body 61 of the pipe valve mechanism 6. Incidentally, the display plate 64 may have a panel shape that extensively covers the pipe 60 of the pipe valve mechanism 6.

Further, in the display plate 64, a circular through hole 65 and a rectangular insertion hole 66 are provided. Further, to the display plate 64, the two IC tags 10, 11 are attached. On the display plate 64, in the vicinity of the IC tag 10 on one side, an index such as a character of "close" or the like is sometimes added, and in the vicinity of the IC tag 11 on the other side, an index such as a character of "open" or the like is sometimes added.

The display plate 64 is fixed to the valve main body 61 of the pipe valve mechanism 6 as illustrated in Fig. 10A. In the through hole 65 of the display plate 64, the open/close shaft 62 of the pipe valve mechanism 6 is inserted in a rotatable state. Further, in the insertion hole 66 of the display plate 64, the stopper 63 of the pipe valve mechanism 6 is inserted.

### (Explanation of functions of the third embodiment)

The detection devices 10, 11, 2, and 3, the valve operation tool 7, and the pipe valve mechanism 6 having such constitutions as above (to be simply referred to as the "detection devices and the like 10, 11, 2, 3, 6, and 7" hereinafter) can create the following functions.

The state illustrated in Fig. 9 is that the pipe valve mechanism 6 is in a closed acting state and the valve is in a closed state. There will be explained operation and action to open the valve in this state.

First, the engaging hole 75 in the engaging portion 70 of the valve operation tool 7 is engaged with the open/close shaft 62 of the pipe valve mechanism 6 in a closed acting state illustrated in Fig. 9. At this time, the detection part 20 of the detector 2 disposed on the detection portion 72 of the valve operation tool 7 and the IC tag 10 on one side disposed on the display plate 64 are approached and faced each other. Then, the close information stored in the IC tag 10 on one side is detected by the detector 2 and is read by the reading device 3. This makes it possible to securely confirm and manage (recognize and manage) that the valve operation tool 7 is in a close operation state and the pipe valve mechanism 6 is in a closed acting state.

Next, the operation portion 71 of the valve operation tool 7 is held to rotate counterclockwise the valve operation tool 7 around the rotation axis O. Then, the open/close shaft 62 of the pipe valve mechanism 6 rotates counterclockwise around the rotation axis O to be brought into an open state illustrated in Fig. 7. Thereby, the valve is opened.

At this time, the detection part 20 of the detector 2 disposed on the detection portion 72 of the valve operation tool 7 and the IC tag 11 on the other side disposed on the display plate 64 are approached and faced each other. Then, the open information stored in the IC tag 11 on the other side is detected by the detector 2 and is read by the reading device 3. This makes it possible to securely confirm and manage (recognize and manage) that the valve operation tool 7 is in an open operation state and the pipe valve mechanism 6 is in an opened acting state.

Further, the operation portion 71 of the valve operation tool 7 in the open operation state illustrated in Fig. 7 is held to rotate clockwise the valve operation tool 7 around the rotation axis O. Then, the open/close shaft 62 of the pipe valve mechanism 6 rotates clockwise around the rotation axis O to be brought into a closed state illustrated in Fig. 9. Thereby, the valve is closed.

At this time, the detection part 20 of the detector 2 disposed on the detection portion 72 of the valve operation tool 7 and the IC tag 10 on one side disposed on the display plate 64 are approached and faced each other as described above. Thereby, the close information stored in the IC tag 10 on one side is read by the reading device 3 via the detector 2, and then it is possible to securely confirm and manage (recognize and manage) the close operation state of the valve operation tool 7 and the closed acting state of the pipe valve mechanism 6.

Incidentally, the valve operation tool 7 is normally stored in a place different from the pipe valve mechanism 6. Then, when the pipe valve mechanism 6 is opened or closed, the valve operation tool 7 is taken out to the pipe valve mechanism 6 from the storage place, and the above-described open or close operation is performed.

### (Explanation of effects of the third embodiment)

The detection devices 10, 11, 2, 3, 6, and 7 and the like according to this embodiment 3 each have the above-described constitution and functions, and their effects will be explained below.

As described above, in this embodiment, it is possible to simultaneously detect the operation state of the valve operation tool 7 and the acting state of the pipe valve mechanism 6 to act by operation of the valve operation tool 7. Therefore, the respective devices 10, 11, 2, 3, 6, and 7 and the like according to this embodiment can securely confirm and manage (recognize and manage) the operation state of the valve operation tool 7 and the acting state of the pipe valve mechanism 6 in association with each other relatively. Therefore, the respective devices 10, 11, 2, 3, 6, and 7 and the like according to this embodiment can reduce the increase in cost due to multiple checks performed by a plurality of people because human errors caused by human visual observation are reduced.

In this embodiment in particular, it is significant when it becomes difficult to visually observe the indexes such as characters of "close," "open," and so on added to the display plate 64 due to getting dirty, recoating being performed thereon, or the like.

Further, in this embodiment, the detector 2 is disposed on the valve operation tool 7 via an adhesive or the second attachment part 23. Therefore, it is possible to equip the existing valve operation tool 7with the detector 2, and thus the existing valve operation tool 7 can be used, thereby making it possible to achieve the reduction in cost. Incidentally, the valve operation tool 7 equipped with the detector 2 according to this embodiment may be manufactured newly.

Further, in this embodiment, the IC tags 10, 11 are disposed on the pipe valve mechanism 6 via the display plate 64 as an attachment part. Therefore, the existing pipe valve mechanism 6 can be equipped with the IC tags 10, 11, and thus the existing pipe valve mechanism 6 can be used, thereby making it possible to achieve the reduction in cost. Incidentally, the pipe valve mechanism 6 equipped with the IC tags 10, 11 according to this embodiment may be manufactured newly.

### (Explanation of modified examples)

Fig. 11A to Fig. 11C are views for explaining modified examples 1 to 3 of the present invention. Hereinafter, there will be explained detection devices, detection systems, operation tools, mechanisms according to the modified examples 1 to 3 (to be simply referred to as "detection devices and the like" hereinafter).

The detection devices and the like according to the above-described first to third embodiments are that the lock operation tool 4 or 4A or the valve operation tool 7 is rotated around the rotation axis O between the two points (the locked position and the unlocked position or the close position and the open position) to actuate the lock mechanism 5 or the pipe valve mechanism 6.

In contrast to this, the detection devices and the like according to the modified example 1, such as an operation tool 82 to control rotational directions of a rotary power device, actuate the mechanism by switching the position between the three positions as illustrated in Fig. 11A, in which the operation tool 82 is operated and rotated between three positions (an IC tag 12L at the left position, an IC tag 12N at the neutral position, and an IC tag 12R at the right position) around the rotation axis O. Incidentally, a rotation angle may be rotation angles other than 90° illustrated in Fig. 11A. Further, the number of operation positions may be four or more other than three.

The detection devices and the like according to the modified example 2 are that an operation tool 83 is linearly operated between three points (an IC tag 13L at the left position, an IC tag 13N at the neutral position, and an IC tag 13R at the right position) to actuate the mechanism by switching the position between the three positions as illustrated in Fig. 11B. Incidentally, the length of a straight line may be lengths other than the length illustrated in Fig. 11B. Further, the number of operation positions may be four or more other than three. Further, the operation is not limited to the linear operation, but may be curve operation, and the linear operation and the curve operation may be combined.

The detection devices and the like according to the modified example 3, such as an operation tool 84 to perform switching of control positions of high-speed advance, low-speed advance, reverse, and stop, and so on of a gear ratio to a rotary power transmission device (transmission), actuate the mechanism, in which the operation tool 84 is operated crosswise linearly between five points (an IC tag 14L at the left position, an IC tag 14N at the neutral position, an IC tag 14R at the right position, an IC tag 14U at the upper position, and an IC tag 14D at the lower position) as illustrated in Fig. 11C when recognizing and managing five states of transmission switching.

### (Explanation of examples other than the first to third embodiments and the modified examples 1 to 3)

Incidentally, in the above-described first to third embodiments and modified examples 1 to 3, the operations of the lock operation tools 4, 4A and the action of the lock mechanism 5 and the operation of the valve operation tool 7 and the action of the pipe valve mechanism 6 have been explained. However, in this invention, it may be one in which a plate body is attached to a main body provided with certain functions so as to be lockable and unlockable or openable and closable.

Incidentally, the present invention is not limited by the above-described first to third embodiments and modified examples 1 to 3. For example, the present invention may be applied to a portion to open and close a toolbox or the like attached to the outside of a construction machine, or the present invention may be applied to an opening/closing mechanism for other external infrastructures or storage doors, protective doors, and the like of important control apparatuses of moving vehicles such as a train, shipping, and aircraft. Further, besides, the present invention may be constituted to include a computer (server, or the like) for managing pieces of the information stored in the IC tags. Further, it is also possible that a peculiar ID is only recorded in the IC tag, the IC tag is made to cooperate with a checklist including an ID on the computer side and information corresponding to it or the like, and the IC tag is set as a virtual memory not having memory information.

### {Reference Signs List}

- 10, 11,: 12L, 12N, 12R, 13L, 13N, 13R, 14L, 14N, 14R, 14U, 14D IC tag (detection device)
- 2, 2A: detector (detection device)
- 20: detection part
- 21: antenna part
- 22: first attachment part
- 23: second attachment part
- 24: wire portion
- 3: reading device (detection device)
- 4, 4A: lock operation tool
- 40: key portion
- 41: operation portion
- 42: detection portion
- 5: lock mechanism
- 50: wall
- 51: door
- 52: lock receiving portion
- 53: cylinder
- 54: lock body
- 55: opening portion
- 56: hinge
- 57: shaft member
- 58: keyhole
- 6: pipe valve mechanism
- 60: pipe
- 61: valve main body
- 62: open/close shaft
- 63: stopper
- 64: display plate
- 65: through hole
- 66: insertion hole
- 7: valve operation tool
- 70: engaging portion
- 71: operation portion
- 72: detection portion
- 73: close stopper
- 74: open stopper
- 75: engaging hole
- 82, 83, 84: operation tool
- O: rotation axis

## Claims

1. A detection system comprising an operation tool (4, 7, 82-84) and a mechanism (5, 6) to act by operation of the operation tool (4, 7, 82-84), the detection system being configured for detecting an operation state of the operation tool (4, 7, 82-84) and an acting state of the mechanism (5, 6) operated by operation of the operation tool (4, 7, 82-84), the detection system further comprising:
a plurality of IC tags (10, 11) that are arrangeable on the mechanism (5, 6) in an unrotatable state and are configured to store information of the operation state of the operation tool (4, 7, 82-84) and information of the acting state of the mechanism (5, 6) respectively;
a key portion (40), or an engaging portion (70), that is provided to the operation tool (4, 7, 82-84) and is configured to rotate a shaft member (57, 62) around a rotation axis (O);
a detector (2, 2A) that is disposed in the operation tool (4, 7, 82-84) and is configured to detect each of the information in the plurality of the IC tags (10, 11), the detector (2, 2A) includes a detection part (20) and an antenna part (21);
an operation portion (41, 71); and
a reading device (3) that is configured to read the information detected by the detector (2, 2A); **characterized in that** the detection part (20) is arranged at the one side of the operation tool (4, 7, 82-84) across the rotation axis (O), the antenna part (21) is arranged along the operation tool (4, 7, 82-84) across the rotation axis (O) and the operation portion (41, 71) is disposed at the other side of the operation tool (4, 7, 82-84) with respect to the detector (2, 2A) across the rotation axis (O).

2. The detection system according to claim 1, wherein
the detector (2, 2A) is attached to the operation tool (4, 7, 82-84) via an attachment part (22, 23).

3. The detection system according to claim 1, wherein
the plurality of the IC tags (10, 11) are each attached to the mechanism (5, 6) via an attachment part (22, 23).

4. The detection system according to any one of claims 1 to 3, wherein
the detection part (20) is configured to detect each of the information in the plurality of the IC tags (10, 11); and
the antenna part (21) is configured to communicate with the reading device (3) by radio.

5. The detection system according to claim 4, wherein
in the case where a wavelength of electromagnetic waves used for communication with the reading device (3) is set to λ, the antenna part (21) in the detector (2) is formed by a wire that has a length of an integral multiple of λ/4 being bent back a plurality of times.

6. The detection system according to any one of claims 1 to 3, wherein
the detection part (20) is configured to detect each of the information in the plurality of the IC tags (10, 11); and
the detector (2A) includes a wire portion (24) that is configured to communicate with the reading device (3) by wire.

7. The detection system according to any one of claims 1 to 6, wherein
the mechanism (5, 6) is a lock mechanism (5) that is configured to lock or unlock a second object (51) to or from a first object (50), and
the operation tool (4, 7, 82-84) is a lock operation tool (4) that is configured to operate a locked state and an unlocked state of the lock mechanism (5).

8. The detection system according to claim 7, wherein
the lock mechanism is a lock mechanism (5) for door (51) and includes:
a lock receiving portion (52) to be provided in a wall (50) as the first object; and
a cylinder (53) and a lock body (54) to be provided in the door (51) as the second object and that are configured to lock or unlock the lock body (54) in or from the lock receiving portion (52) via the cylinder (53), and
the lock operation tool is a lock operation tool (4) for door (51) and includes:
the key portion (40) to be inserted in the cylinder (53);
an operation portion (41) that is configured to operate the key portion (40) to lock or unlock the lock mechanism (5) for door (51); and
a detection portion (42) on which the detector (2, 2A) is disposed.

9. The detection system according to any one of claims 1 to 6, wherein
the mechanism is a pipe valve mechanism (6) to be provided on the way of a pipe (60) and that is configured to close a valve to stop flow of a fluid in the pipe (60), and open the valve to let the fluid in the pipe flow, and
the operation tool is a valve operation tool (7) that is configured to operate a closed state and an open state of the valve of the pipe valve mechanism (6).

10. The detection system according to claim 9, wherein
the pipe valve mechanism (6) includes:
a valve main body (61) to be provided on the way of the pipe (60);
the valve accommodated in the valve main body (61) so as to be openable and closable;
an open/close shaft (62) coupled to the valve, projecting to the outside from the valve main body, and opening and closing the valve; and
a stopper (63) provided on the valve main body (61), and
the valve operation tool is a valve operation tool (7) including:
the engaging portion (70) that is configured to engage with the open/close shaft (62);
an operation portion (71) that is configured to operates the engaging portion (70);
a detection portion (72) on which the detector (2, 2A) is disposed;
a close stopper (73) that is configured to abut on the stopper (63) at the time of a close operation of the valve operation tool (7); and
an open stopper (74) that is configured to abut on the stopper (63) at the time of an open operation of the valve operation tool (7).

11. A detection system according to any one of claims 1 to 10, wherein
the operation tool (4, 7, 82-84) has the detector (2, 2A) attached thereto via an attachment part.

12. A detection system according to any one of claims 1 to 10, wherein
the mechanism (5, 6) has the plurality of pieces of the IC tags (10, 11) each attached thereto via an attachment part.

## Patentansprüche

1. Ein Erfassungssystem, das ein Betätigungswerkzeug (4, 7, 82-84) und einen Mechanismus (5, 6) aufweist, der durch eine Betätigung des Betätigungswerkzeugs (4, 7, 82-84) wirkt, wobei das Erfassungssystem konfiguriert ist zum Erfassen eines Betätigungszustands des Betätigungswerkzeugs (4, 7, 82-84) und eines Wirkungszustands des Mechanismus (5, 6), der durch eine Betätigung des Betätigungswerkzeugs (4, 7, 82-84) betätigt wird, wobei das Erfassungssystem ferner folgende Merkmale aufweist:
eine Mehrzahl von IC-Etiketten (10, 11), die an dem Mechanismus (5, 6) in einem nicht drehbaren Zustand angeordnet sein können und konfiguriert sind, Informationen über den Betätigungszustand des Betätigungswerkzeugs (4, 7, 82-84) beziehungsweise Informationen des Wirkungszustands des Mechanismus (5, 6) zu speichern;
einen Schlüsselabschnitt (40) oder einen Eingriffnahmeabschnitt (70), der an dem Betätigungswerkzeug (4, 7, 82-84) vorgesehen ist und konfiguriert ist, ein Wellenbauglied (57, 62) um eine Drehachse (O) zu drehen;
einen Detektor (2, 2A), der in dem Betätigungswerkzeug (4, 7, 82-84) angeordnet ist und konfiguriert ist, alle der Informationen in der Mehrzahl der IC-Etiketten (10, 11) zu erfassen, wobei der Detektor (2, 2A) ein Erfassungsteil (20) und ein Antennenteil (21) umfasst;
einen Betätigungsabschnitt (41, 71); und
eine Lesevorrichtung (3), die konfiguriert ist, die Informationen, die durch den Detektor (2, 2A) erfasst werden, zu lesen; **dadurch gekennzeichnet, dass** das Erfassungsteil (20) an der einen Seite des Betätigungswerkzeugs (4, 7, 82-84) über der Drehachse (O) angeordnet ist, wobei das Antennenteil (21) entlang dem Betätigungswerkzeug (4, 7, 82-84) über der Drehachse (O) angeordnet ist und der Betätigungsabschnitt (41, 71) an der anderen Seite des Betätigungswerkzeugs (4, 7, 82-84) in Bezug auf den Detektor (2, 2A) über der Drehachse (O) angeordnet ist.

2. Das Erfassungssystem gemäß Anspruch 1, bei dem
der Detektor (2, 2A) über ein Anbringungsteil (22, 23) an dem Betätigungswerkzeug (4, 7, 82-84) angebracht ist.

3. Das Erfassungssystem gemäß Anspruch 1, bei dem
die Mehrzahl der IC-Etiketten (10, 11) jeweils über ein Anbringungsteil (22, 23) an dem Mechanismus (5, 6) angebracht sind.

4. Das Erfassungssystem gemäß einem der Ansprüche 1 bis 3, bei dem
das Erfassungsteil (20) konfiguriert ist, alle der Informationen in der Mehrzahl der IC-Etiketten (10, 11) zu erfassen; und
das Antennenteil (21) konfiguriert ist, mit der Lesevorrichtung (3) über Funk zu kommunizieren.

5. Das Erfassungssystem gemäß Anspruch 4, bei dem
in dem Fall, in dem eine Wellenlänge elektromagnetischer Wellen, die für Kommunikation in der Lesevorrichtung (3) verwendet werden, auf λ eingestellt ist, das Antennenteil (21) in dem Detektor (2) durch einen Draht gebildet ist, der eine Länge eines ganzzahligen Vielfachen von λ/4 aufweist, die mehrere Male zurückgebogen ist.

6. Das Erfassungssystem gemäß einem der Ansprüche 1 bis 3, bei dem
das Erfassungsteil (30) konfiguriert ist, alle der Informationen in der Mehrzahl der IC-Etiketten (10, 11) zu erfassen; und
der Detektor (2A) einen Drahtabschnitt (24) umfasst, der konfiguriert ist, mit der Lesevorrichtung (3) durch Draht zu kommunizieren.

7. Das Erfassungssystem gemäß einem der Ansprüche 1 bis 6, bei dem
der Mechanismus (5, 6) ein Verriegelungsmechanismus (5) ist, der konfiguriert ist, ein zweites Objekt (21) mit oder von einem ersten Objekt (50) zu verriegeln oder zu entriegeln, und
das Betätigungswerkzeug (4, 7, 82-84) ein Verriegelungsbetätigungswerkzeug (4) ist, das konfiguriert ist, einen verriegelten Zustand und einen nicht verriegelten Zustand des Verriegelungsmechanismus (5) zu betätigen.

8. Das Erfassungssystem gemäß Anspruch 7, bei dem
der Verriegelungsmechanismus ein Verriegelungsmechanismus (5) für eine Tür (51) ist und folgende Merkmale umfasst:
einen Verriegelungsaufnahmeabschnitt (52), der in einer Wand (50) als das erste Objekt vorzusehen ist; und
einen Zylinder (53) und einen Verriegelungskörper (54), die in der Tür (51) als das zweite Objekt vorzusehen sind und die konfiguriert sind, den Verriegelungskörper (54) in oder von dem Verriegelungsaufnahmeabschnitt (52) über den Zylinder (53) zu verriegeln oder zu entriegeln, und
das Verriegelungsbetätigungswerkzeug ein Verriegelungsbetätigungswerkzeug (4) für eine Tür (51) ist und folgende Merkmale umfasst:
den Schlüsselabschnitt (40), der in den Zylinder (53) einzufügen ist;
einen Betätigungsabschnitt (41), der konfiguriert ist, den Schlüsselabschnitt (40) zu betätigen, um den Verriegelungsmechanismus (5) für die Tür (51) zu verriegeln oder zu entriegeln; und
einen Erfassungsabschnitt (42), an dem der Detektor (2, 2A) angeordnet ist.

9. Das Erfassungssystem gemäß einem der Ansprüche 1 bis 6, bei dem
der Mechanismus ein Rohrventilmechanismus (6) ist, der in dem Weg eines Rohrs (60) vorzusehen ist und der konfiguriert ist, ein Ventil zu schließen, um einen Fluss eines Fluids in dem Rohr (60) zu stoppen und das Ventil zu öffnen, um das Fluid in dem Rohr fließen zu lassen, und
das Betätigungswerkzeug ein Ventilbetätigungswerkzeug (7) ist, das konfiguriert ist, einen geschlossenen Zustand und einen offenen Zustand des Ventils des Rohrventilmechanismus (6) zu betätigen.

10. Das Erfassungssystem gemäß Anspruch 9, bei dem
der Rohrventilmechanismus (6) folgende Merkmale umfasst:
einen Ventilhauptkörper (61), der auf dem Weg des Rohrs (60) vorzusehen ist;
das Ventil, das in den Ventilhauptkörper (61) aufgenommen ist, um geöffnet und geschlossen werden zu können;
eine Öffnen/Schließen-Welle (62), die mit dem Ventil gekoppelt ist, die von dem Ventilhauptkörper nach außen vorsteht und das Ventil öffnet und schließt; und
eine Anschlagvorrichtung (63), die an dem Ventilhauptkörper (61) vorgesehen ist, und
das Ventilbetätigungswerkzeug ein Ventilbetätigungswerkzeug (7) ist, das folgende Merkmale umfasst:
den Eingriffnahmeabschnitt (70), der konfiguriert ist, die Öffnen/Schließen-Welle (62) in Eingriff zu nehmen;
einen Betätigungsabschnitt (71), der konfiguriert ist, den Eingriffnahmeabschnitt (70) zu betätigen;
einen Erfassungsabschnitt (72), an dem der Detektor (2, 2A) angeordnet ist;
eine Schließen-Anschlagvorrichtung (73), die konfiguriert ist, zum Zeitpunkt einer Schließen-Betätigung des Ventilbetätigungswerkzeugs (7) an die Anschlagvorrichtung (63) anzustoßen; und
eine Öffnen-Anschlagvorrichtung (74), die konfiguriert ist, zum Zeitpunkt einer öffnen-Betätigung des Ventilbetätigungswerkzeugs (7) an die Anschlagvorrichtung (63) anzustoßen.

11. Ein Erfassungssystem gemäß einem der Ansprüche 1 bis 10, bei dem
der Detektor (2, 2A) über ein Anbringungsteil an dem Betätigungswerkzeug (4, 7, 82-84) angebracht ist.

12. Ein Erfassungssystem gemäß einem der Ansprüche 1 bis 10, bei dem
die Mehrzahl von Stücken der IC-Etiketten jeweils über ein Anbringungsteil an dem Mechanismus (5, 6) angebracht sind.

## Revendications

1. Système de détection comprenant un outil d'actionnement (4, 7, 82 à 84) et un mécanisme (5, 6) destiné à agir par actionnement de l'outil d'actionnement (4, 7, 82 à 84), le système de détection étant configuré pour détecter un état d'actionnement de l'outil d'actionnement (4, 7, 82 à 84) et un état d'actionnement du mécanisme (5, 6) actionné par l'actionnement de l'outil d'actionnement (4, 7, 82 à 84), le système de détection comprenant par ailleurs:
une pluralité d'étiquettes de CI (10, 11) qui peuvent être disposées sur le mécanisme (5, 6) dans un état non rotatif et qui sont configurées pour mémoriser respectivement les informations de l'état d'actionnement de l'outil d'actionnement (4, 7, 82 à 84) et les informations de l'état d'actionnement du mécanisme (5, 6);
une partie de clé (40), ou une partie de venue en prise (70) qui est prévue sur l'outil d'actionnement (4, 7, 82 à 84) et qui est configurée pour faire tourner un élément d'arbre (57, 62) autour d'un axe de rotation (O);
un détecteur (2, 2A) qui est disposé dans l'outil d'actionnement (4, 7, 82 à 84) et qui est configuré pour détecter chacune des informations dans la pluralité des étiquettes de CI (10, 11), le détecteur (2, 2A) comporte une partie de détection (20) et une partie d'antenne (21);
une partie d'actionnement (41, 71); et
un dispositif de lecture (3) qui est configuré pour lire les informations détectées par le détecteur (2, 2A);
**caractérisé par le fait que** la partie de détection (20) est disposée d'un côté de l'outil d'actionnement (4, 7, 82 à 84) à travers l'axe de rotation (O), la partie d'antenne (21) est disposée le long de l'outil d'actionnement (4, 7, 82 à 84) à travers l'axe de rotation (O) et la partie d'actionnement (41, 71) est disposée de l'autre côté de l'outil d'actionnement (4, 7, 82 à 84) par rapport au détecteur (2, 2A) à travers l'axe de rotation (O).

2. Système de détection selon la revendication 1, dans lequel
le détecteur (2, 2A) est fixé à l'outil d'actionnement (4, 7, 82 à 84) par l'intermédiaire d'une pièce de fixation (22, 23).

3. Système de détection selon la revendication 1, dans lequel
la pluralité d'étiquettes de CI (10, 11) sont fixées, chacune, au mécanisme (5, 6) par l'intermédiaire d'une pièce de fixation (22, 23).

4. Système de détection selon l'une quelconque des revendications 1 à 3, dans lequel
la partie de détection (20) est configurée pour détecter chacune des informations dans la pluralité des étiquettes de CI (10, 11); et
la partie d'antenne (21) est configurée pour communiquer avec le dispositif de lecture (3) par radio.

5. Système de détection selon la revendication 4, dans lequel
au cas où une longueur d'onde des ondes électromagnétiques utilisées pour une communication avec le dispositif de lecture (3) est fixée à λ, la partie d'antenne (21) dans le détecteur (2) est formée par un fil qui présente une longueur d'un multiple entier de λ/4 en étant replié une pluralité de fois.

6. Système de détection selon l'une quelconque des revendications 1 à 3, dans lequel
la partie de détection (20) est configurée pour détecter chacune des informations dans la pluralité des étiquettes de CI (10, 11); et
le détecteur (2A) comporte une partie de fil (24) qui est configurée pour communiquer avec le dispositif de lecture (3) par fil.

7. Système de détection selon l'une quelconque des revendications 1 à 6, dans lequel
le mécanisme (5, 6) est un mécanisme de verrouillage (5) qui est configuré pour verrouiller ou déverrouiller un deuxième objet (51) à ou d'un premier objet (50), et
l'outil d'actionnement (4, 7, 82 à 84) est un outil d'actionnement de verrou (4) qui est configuré pour actionner un état verrouillé et un état déverrouillé du mécanisme de verrouillage (5).

8. Système de détection selon la revendication 7, dans lequel
le mécanisme de verrouillage est un mécanisme de verrouillage (5) pour porte (51) et comporte:
une partie de réception de verrou (52) à prévoir dans un mur (50) comme premier objet; et
un cylindre (53) et un corps de verrou (54) à prévoir dans la porte (51) comme deuxième objet et qui sont configurés pour verrouiller ou déverrouiller le corps de verrou (54) dans ou de la partie de réception de verrou (52) par l'intermédiaire du cylindre (53), et
l'outil d'actionnement de verrou est un outil d'actionnement de verrou (4) pour porte (51) et comporte:
la partie de clé (40) à insérer dans le cylindre (53);
une partie d'actionnement (41) qui est configurée pour actionner la partie de clé (40) pour verrouiller ou déverrouiller le mécanisme de verrou (5) pour porte (51); et
une partie de détection (42) sur laquelle est disposé le détecteur (2, 2A).

9. Système de détection selon l'une quelconque des revendications 1 à 6, dans lequel
le mécanisme est un mécanisme de soupape de tuyau (6) à prévoir sur le trajet d'un tuyau (60) et qui est configuré pour fermer une soupape pour arrêter la circulation d'un fluide dans le tuyau (60), et pour ouvrir la soupape pour laisser circuler le fluide dans le tuyau, et
l'outil d'actionnement est un outil d'actionnement de soupape (7) qui est configuré pour actionner un état fermé et un état ouvert de la soupape du mécanisme de soupape de tuyau (6).

10. Système de détection selon la revendication 9, dans lequel
le mécanisme de soupape de tuyau (6) comporte:
un corps principal de soupape (61) à prévoir sur le trajet du tuyau (60);
la soupape étant logée dans le corps principal de soupape (61) de manière à pouvoir être ouverte et fermée;
un arbre d'ouverture/fermeture (62) couplé à la soupape, ressortant vers l'extérieur depuis le corps principal de soupape, et ouvrant et fermant la soupape; et
un butoir (63) prévu sur le corps principal de soupape (61), et
l'outil d'actionnement de soupape est un outil d'actionnement de soupape (7) comportant:
la partie de venue en prise (70) qui est configurée pour venir en prise avec l'arbre d'ouverture/fermeture (62);
une partie d'actionnement (71) qui est configurée pour actionner la partie de venue en prise (70);
une partie de détection (72) sur laquelle est disposé le détecteur (2, 2A);
un butoir de fermeture (73) qui est configuré pour venir en butée contre le butoir (63) au moment d'un actionnement en fermeture de l'outil d'actionnement de soupape (7); et
un butoir d'ouverture (74) qui est configuré pour venir en butée contre le butoir (63) au moment d'un actionnement en ouverture de l'outil d'actionnement de soupape (7).

11. Système de détection selon l'une quelconque des revendications 1 à 10, dans lequel
l'outil d'actionnement (4, 7, 82 à 84) présente le détecteur (2, 2A) fixé à ce dernier par l'intermédiaire d'une pièce de fixation.

12. Système de détection selon l'une quelconque des revendications 1 à 10, dans lequel
le mécanisme (5, 6) présente la pluralité de pièces des étiquettes de CI (10, 11) fixées, chacune, à ce dernier par l'intermédiaire d'une pièce de fixation.
